# EUROPÄISCHE PATENTSCHRIFT

(11) **EP 1 584 515 B1**
(45) Veröffentlichungstag und Bekanntmachung des Hinweises auf die Patenterteilung: **06.08.2008**
(21) Anmeldenummer: 05006336.1
(22) Anmeldetag: 23.03.2005
(51) Int. Cl.: B60N 3/10

(54) **Getränkehalter**
Beverage holder
Porte-boisson

(30) Priorität: 08.04.2004 DE 102004017419
(43) Veröffentlichungstag der Anmeldung: 12.10.2005
(73) Patentinhaber: fischer automotive systems GmbH, 72160 Horb (DE)
(72) Erfinder: Schaal, Falk, 72275 Alpirsbach (DE)

(56) Entgegenhaltungen:
- EP-A2- 1 138 549
- DE-A1- 10 137 253
- DE-C1- 4 429 515
- DE-U1- 20 216 674

## Beschreibung

Die Erfindung betrifft einen Getränkehalter mit den Merkmalen des Oberbegriffs des Anspruchs 1.

Derartige Getränkehalter sind an sich bekannt, sie dienen zum Halten eines oder zweier Getränkebehälter in einem Kraftwagen. Getränkebehälter können eine Getränkedose, eine Tasse, ein Becher oder dgl. sein. Aus der DE 101 37 253 A1 ist ein Getränkehalter bekannt, der eine erste, oben offene Aufnahme für ein Trinkgefäß aufweist. In der Grundstellung kann der Getränkehalter einen Getränkebehälter aufnehmen. Durch eine Linearbewegung lässt sich die erste Aufnahme in eine Gebrauchsstellung herausziehen. Hierdurch wird eine zweite, unter der ersten Aufnahme befindliche zweite Aufnahme für ein Trinkgefäß zugänglich. In Gebrauchsstellung kann der Getränkehalter somit zwei Trinkgefäße aufnehmen.

Die DE 202 16 674 U1 beschreibt einen in eine Unterlage versenkbaren Getränkehalter. Der Getränkehalter ist in Nichtgebrauchsstallung in die ihn umgebende Verkleidung integriert und oben geschlossen. In der Nichtgebrauchsstellung kann er kein Trinkgefäß aufnehmen. Er weist einen ersten Haltering, der an einem Träger angebracht ist, ein Bodenteil, das ebenfalls am Träger angebracht ist, und einen zweiten Haltering auf. Der erste Haltering kann selektiv in einer ersten Stellung verriegelt werden, in der er mit dem zweiten Haltering konzentrisch ist oder eine zweite Stellung einnehmen, in der er gegenüber dem zweiten Haltering verdreht ist. Der Getränkehalter kann je nach Stellung ein oder zwei Trinkgefäße aufnehmen.

Aus der DE 44 29 515 C1 ist ein Getränkehalter für zwei Getränkebehälter bekannt. Der bekannte Getränkehalter weist eine zylindrische Vertiefung als Aufnahme zum Einstellen eines Getränkebehälters auf. Des Weiteren weist der bekannte Getränkehalter einen Haltering auf, der aus zwei zusammenklappbaren Haltebügeln gebildet ist. Mittels einer Schiebeführung ist der Haltering nach oben verschiebbar und zur Seite verschwenkbar in eine Haltestellung, in der sich der Haltering oberhalb der und seitlich versetzt zur Aufnahme befindet. In der Haltestellung ist ein zweiter Getränkebehälter in den Haltering einstellbar. In einer Grundstellung befindet sich der (zusammengeklappte) Haltering in der Aufnahme, die Aufnahme ist nicht benutzbar.

Der Erfindung liegt die Aufgabe zugrunde, einen vielseitig nutzbaren Getränkehalter vorzuschlagen.

Diese Aufgabe wird erfindungsgemäß durch einen Getränkehalter mit den Merkmalen des Anspruchs 1 gelöst. Der erfindungsgemäße Getränkehalter weist eine oben offene Aufnahme zum Einstellen eines Getränkebehälters auf. Dabei bezieht sich "oben" auf eine vorgesehene Einbaulage des Getränkehalters. Die Aufnahme kann bspw. eine zylindrische Vertiefung sein. Des Weiteren weist der erfindungsgemäße Getränkehalter einen Haltering auf, der sich in einer Grundstellung an einem oberen Rand der Aufnahme befindet. Der Haltering behindert dabei nicht das Einstellen und Entnehmen eines Getränkebehälters in die Aufnahme. Der Haltering muss nicht geschlossen sein, es genügt, wenn der Haltering einen eingestellten Getränkebehälter soweit umgreift und seitlich abstützt, dass der Getränkebehälter in allen Richtungen seitlich gehalten ist. In der Grundstellung hat der Haltering an sich keine Funktion, er ist platzsparend untergebracht. Im Unterschied zu dem aus der DE 44 29 515 C1 bekannten Getränkehalter ist der erfindungsgemäße Getränkhalter zum Einstellen eines Getränkbehälters nutzbar, wenn sich der Haltering in der Grundstellung befindet.

Der Haltering des erfindungsgemäßen Getränkehaltes ist in eine erste Haltestellung bringbar, in der er sich seitlich oberhalb der Aufnahme befindet. In der ersten Haltestellung ist ein Getränkebehälter in die Aufnahme des Getränkehalters und ein zweiter Getränkebehälter seitlich daneben und höher in den Haltering einstellbar. Der erfindungsgemäße Getränkehalter eignet sich damit zum Halten zweier Getränkebehälter.

Des Weiteren ist der Haltering des erfindungsgemäßen Getränkehalters in eine zweite Haltestellung bringbar, in der er sich oberhalb der Aufnahme zum Einstellen des Getränkebehälters befindet, jedoch nicht seitlich zur Aufnahme versetzt sondern deckungsgleich oder jedenfalls in etwa deckungsgleich mit der Aufnahme ist. In der zweiten Haltestellung des Halterings ist ein Getränkbehälter in den Getränkehalter einstellbar, wobei der Getränkebehälter durch den Haltering durch in die Aufnahme eingestellt wird. Der Oberhalb der Aufnahme befindliche Haltering hält den eingestellten Getränkebehälter in größerer Höhe. Dadurch eignet sich der erfindungsgemäße Getränkehalter zum Einstellen eines höheren Getränkebehälters wie bspw. einer Flasche, die in der Aufnahme nicht ausreichend kippsicher gehalten wäre.

Der erfindungsgemäße Getränkehalter hat den Vorteil, dass er in einem Bauraum unterbringbar ist, der für einen Getränkehalter zum Halten nur eines Getränkebehälters erforderlich ist, wobei der erfindungsgemäße Getränkebehälter zum wahlweise Halten eines oder zweier Getränkebehälter oder zum Halten eines höheren Getränkebehälters, der von dem in der zweiten Haltestellung befindlichen Haltering in größerer Höhe seitlich abgestützt wird, gehalten ist, geeignet ist.

Eine Ausgestaltung der Erfindung sieht eine Schiebeführung vor, mit der der Haltering nach oben verschiebbar geführt ist. Derartige Schiebeführungen sind in unterschiedlichen Ausführungsformen bekannt, geeignet ist bspw. auch eine Teleskopführung.

Eine Ausgestaltung der Erfindung sieht ein Schwenklager vor, mit dem der Haltering zur Seite schwenkbar geführt ist. Eine Weiterbildung sieht ein Schwenklager mit einer horizontalen Schwenkachse vor, es befindet sich also in einer Haltestellung die eine und in der anderen Haltestellung die andere Stirnseite des Halterings oben. Ein Schwenklager stellt eine einfache Möglichkeit dar, den Haltering zur Seite beweglich zu führen.

Eine Ausgestaltung der Erfindung sieht eine lösbare Verbindung für den Haltering vor. Der in der Grundstellung am oberen Rand der Aufnahme des Getränkehalters befindliche Haltering ist lösbar und oberhalb der Aufnahme am Getränkehalter befestigbar. Dabei ist eine Befestigung in der ersten Haltestellung seitlich versetzt zur Aufnahme und in der zweiten Haltestellung deckungsgleich oder im Wesentliche deckungsgleich mit der Aufnahme möglich. Diese Ausgestaltung der Erfindung ermöglicht eine einfache Konstruktion des Getränkehalters mit im einfachsten Fall nur zwei Teilen, nämlich dem Getränkehalter mit der Aufnahme selbst und dem Haltering als zweitem Teil.

Die Erfindung wird nachfolgend anhand in der Zeichnung dargestellter Ausführungsbeispiele näher erläutert. Es zeigen:
- Figuren 1 bis 6: eine erstes Ausführungsbeispiel eines erfindungsgemäßen Getränkehalters in perspektivischer Darstellung in unterschiedlichen Stellungen,
- Figuren 7 bis 9: ein zweites Ausführungsbeispiel eines erfindungsgemäßen Getränkehalters in verschiedenen Stellungen; und
- Figuren 10 bis 13: ein drittes Ausführungsbeispiel eines erfindungsgemäßen Getränkehalters in perspektivischer Darstellung in verschiedenen Stellungen.

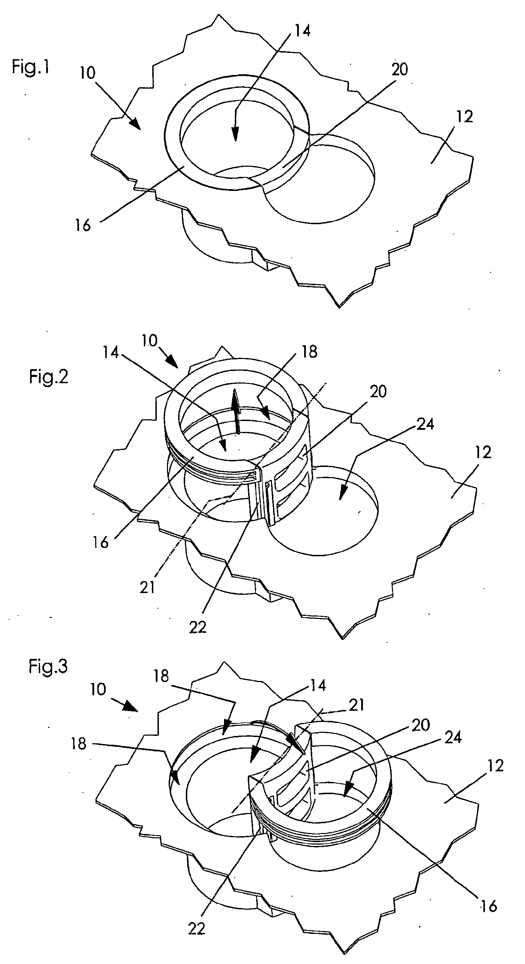

Der in Figuren 1 bis 3 dargestellte, erfindungsgemäße Getränkehalter 10 ist in eine Mittelkonsole 12, von der in der Zeichnung ein Bruchstück dargestellt ist, eines im Übrigen nicht dargestellten Kraftwagens integriert. Der Getränkehalter 10 weist eine zylindrische Vertiefung auf, die eine Aufnahme 14 zum Einstellen eines Getränkebehälters wie bspw. einer Getränkedose, seines Bechers oder einer Tasse bildet. Des Weiteren weist der Getränkehalter 10 ein Haltering 16 auf, der in seiner in Figur 1 dargestellten Grundstellung an einem oberen Rand der Aufnahme 14 angeordnet ist. Im dargestellten Ausführungsbeispiel der Erfindung liegt der Haltering 16 in seiner Grundstellung in einer ringstufenförmigen Erweiterung 18 der Aufnahme 16 an ihrem oberen Rand ein (siehe Figuren 2 und 3), er ist bündig mit der Mittelkonsole 12 in dieser versenkt. Der Haltering 16 ist mit einem in der Zeichnung nicht sichtbaren Schwenklager am oberen Ende eines Schiebers 20 schwenkbar gelagert. Der Schieber 20 ist plattenförmig und einem Durchmesser der Aufnahme 14 entsprechend gewölbt. Der Schieber 20 ist in einer Ausnehmung an einem Umfang der Aufnahme 14 angeordnet. Der Schieber 20 ist mit einer Schiebeführung 22 vertikal verschiebbar am Getränkehalter 10 geführt, wobei die Schiebeführung 22 als Nut- und Federführung ausgebildet ist. In der in Figur 1 dargestellten Grundstellung ist der Schieber 20 in der Mittelkonsole 12 versenkt und schließt oben bündig mit der Mittelkonsole 12 ab.

Durch Verschieben des Schieber 20 nach oben lässt sich der Haltering 16 in eine Haltestellung bringen, in der er sich oberhalb der Aufnahme 14 befindet. Dabei gibt es zwei Haltestellungen, nämlich eine in Figur 2 dargestellte, nachfolgend als zweite Haltestellung bezeichnete, in der sich der Haltering 16 deckungsgleich mit der Aufnahme 14 oberhalb dieser befindet, und in eine in Figur 3 dargestellte erste Haltestellung, in der der Haltering 16 um die horizontale Schwenkachse 21 des Schwenklagers auf eine der Aufnahme 16 abgewandte Seite des Schiebers 20 geschwenkt ist. In der zweiten Haltestellung befindet sich der Haltering 16 oberhalb der Aufnahme 14 und ist seitlich zu ihr versetzt. Unterhalb des Halterings 16 in der ersten Haltestellung befindet sich eine niedrige zylindrische Ansenkung 24 zur Aufnahme eines Bodens eines eingestellten Getränkebehälters.

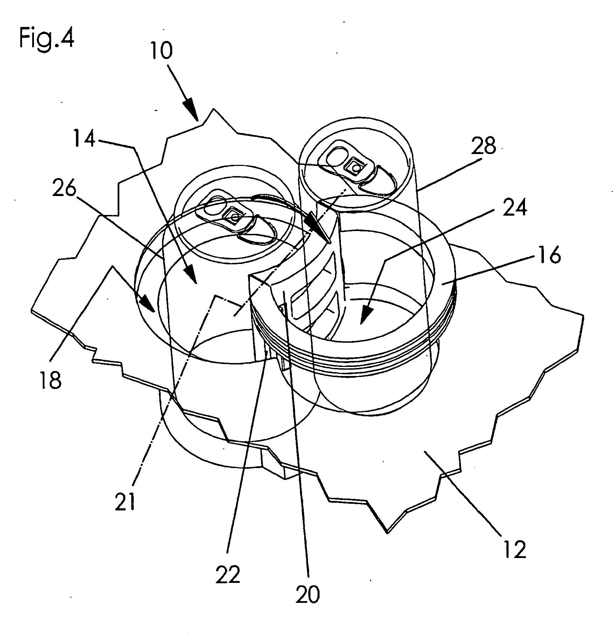

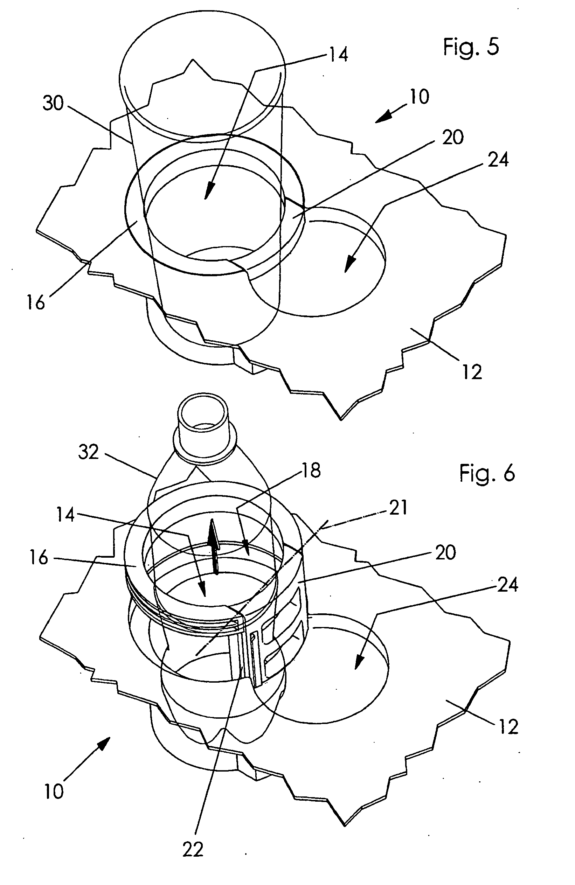

Wie in Figur 4 zu sehen ist in der ersten Haltestellung des Halterings 16 ein Getränkebehälter, bspw. eine Getränkedose 26 in die Aufnahme 14, und ein zweiter Getränkebehälter, bspw. ebenfalls eine Getränkedose 28 in den Haltering 16 einstellbar, der erfindungsgemäße Getränkehalter 10 kann also zwei Getränkebehälter 26, 28 halten. Wie in Figur 5 zu sehen kann in der Grundstellung des Halterings 16 ein Getränkebehälter, bspw. ein Becher 30 in die Aufnahme 14 des Getränkehalters 10 eingestellt werden. In der zweiten Haltestellung kann wie in Figur 6 dargestellt ein höherer Getränkebehälter bspw. eine Flasche 32 durch den Haltering 16 in die Aufnahme 14 des Getränkehalters 10 eingestellt werden. Der oberhalb der Aufnahme befindliche Haltering 16 stützt die Flasche 32 in größerer Höhe seitlich ab, so dass die Flasche 32 kippsicher im Getränkehalter 10 gehalten ist.

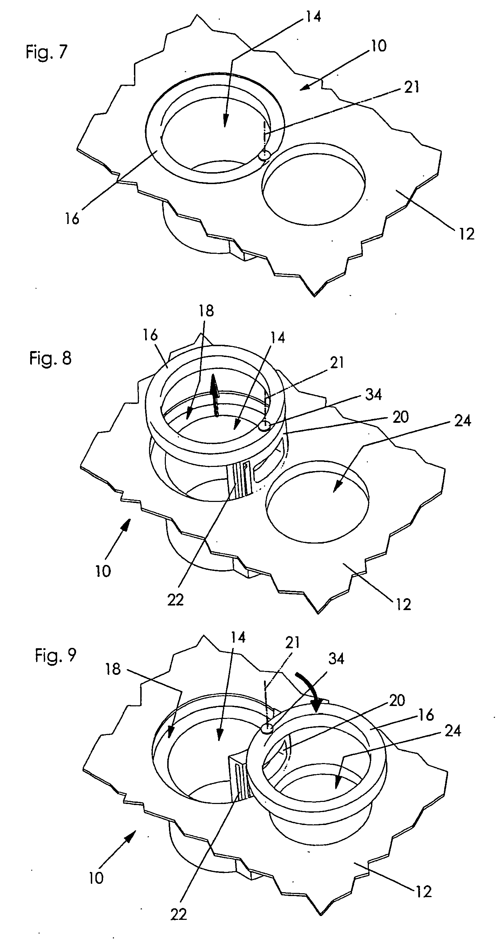

Bei dem in Figuren 7 bis 9 dargestellten, erfindungsgemäßen Getränkehalter 10 weist das Schwenklager 34, mit dem der Haltering 16 schwenkbar am Schieber 20 gelagert bzw. geführt ist, eine vertikale Schwenkachse 21 auf. Im Übrigen ist der in Figuren 7 bis 9 dargestellte Getränkehalter 10 gleich ausgebildet wie der in Figuren 1 bis 6 dargestellte Getränkehalter 10 und funktioniert in gleicher Weise. Zur Vermeidung von Wiederholungen wird zur Erläuterung des Getränkehalters 10 aus Figuren 7 bis 9 auf die oben stehenden Erläuterungen des Getränkehalters 10 aus Figuren 1 bis 6 verwiesen. Gleiche Bauteile sind mit gleichen Bezugszahlen versehen.

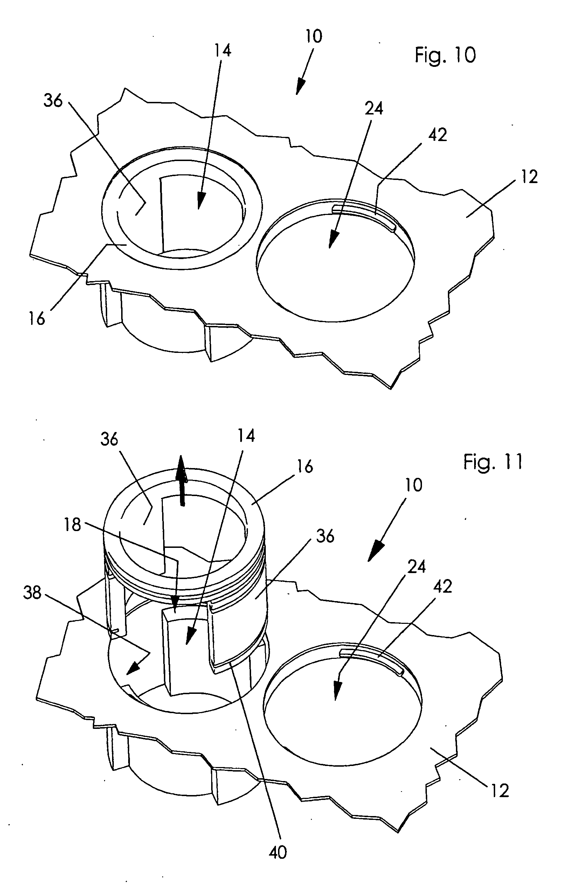

Der in Figuren 10 bis 13 dargestellte, erfindungsgemäße Getränkehalter 10 weist eine lösbare Verbindung für den Haltering 16 auf. Die lösbare Verbindung ist im dargestellten und beschriebenen Ausführungsbeispiel der Erfindung als Bajonettverschluss ausgeführt. Andere lösbare Verbindungen sind möglich.

Wie insbesondere in Figur 11 zu sehen weist der Haltering 16 des Getränkehalters 10 zwei nach unten stehende Laschen 36 auf. Die Laschen 36 sind zylinderförmig, sie weisen den gleichen Radius wie der Haltering 16 auf, sie erstrecken sich jeweils über etwa 90° in Umfangsrichtung und sind einander gegenüberliegend angeordnet. Die Aufnahme 14 des in Figuren 10 bis 13 dargestellten Getränkehalters 10 weist zu den Laschen 36 komplementäre Ausnehmungen 38 an ihrem Umfang auf. In seiner in Figur 10 dargestellten Grundstellung liegt der Haltering 16 wie bei den zuvor beschriebenen Ausführungsbeispielen der Erfindung in der ringstufenförmigen Erweiterung 18 am oberen Rand der Aufnahme 14 ein und schließt bündig mit der Mittelkonsole 12 ab. Die Laschen 36 des Halterings 16 befinden sich in den Ausnehmungen 38 der Aufnahme 14.

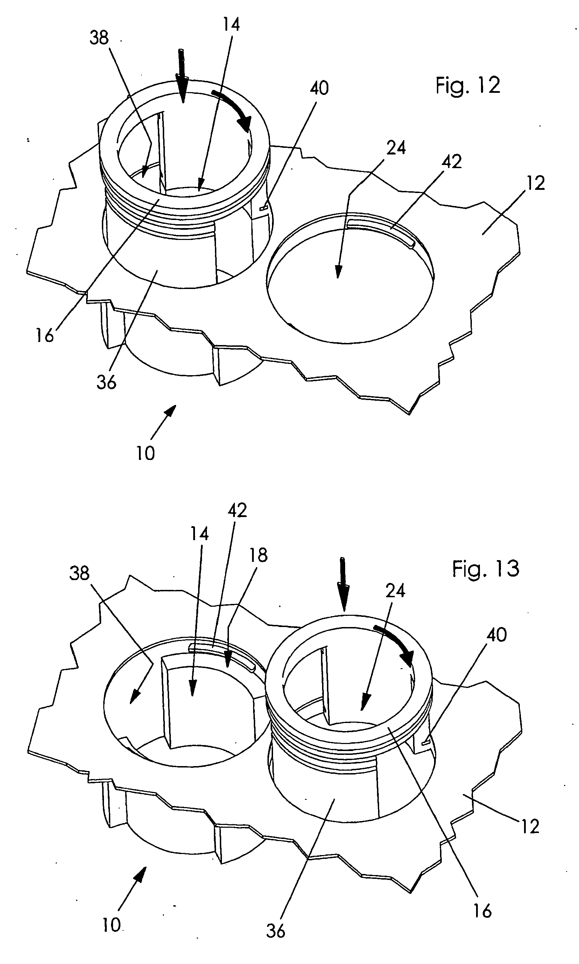

Um den Haltering 16 in die Haltestellungen zu verbringen wird er nach oben aus der Aufnahme 14 herausgezogen (Figur 11) und wie in Figuren 12 und 13 dargestellt in die beiden Haltestellungen verbracht. Der Bajonettverschluss des Halterings 16 weist in Umfangsrichtung verlaufende Nuten 40 an unteren, dem Haltering 16 fernen Enden der Laschen 36 auf. Die Nuten 40 wirken mit Rippen 42 zusammen, die in der ringstufenförmigen Erweiterung am oberen Rand der Aufnahme 14 und in der Ansenkung 24, die sich seitlich neben der Aufnahme 14 befindet, angeordnet sind. Die Rippen 42 in der Aufnahme 40 sind um 90° in Umfangsrichtung zu den Ausnehmungen 38 der Aufnahme 14 für die Laschen 36 des Halterings 16 versetzt. Zur Befestigung in der ersten Haltestellung wird der Haltering 16 mit seinen Laschen 36 in die Ansenkung 24 eingesetzt und durch Drehung um ca. 90° werden die Nuten 40 der Laschen 36 des Halterings 16 mit den Rippen 42 in Eingriff gebracht, d.h. der Bajonettverschluss 40, 42 wird geschlossen und der Haltering 16 in der ersten Haltestellung mit dem Getränkhalter 10 verbunden. Wie in Figuren 1 bis 9 befindet sich der Haltring 16 des Getränkehalters 10 aus Figuren 10 bis 13 in der ersten, in Figur 13 dargestellten Haltestellung oberhalb der und seitlich versetzten zur Aufnahme 14, oberhalb der Ansenkung 24.

In der zweiten, in Figur 12 dargestellten zweiten Haltestellung werden die Nuten 40 der Laschen 36 des Halterings 16 durch Drehung um 90° mit den Rippen 42 der Aufnahme 14 in Eingriff gebracht, d.h. der Bajonettverschluss 40, 42 wird geschlossen und der Haltering 16 ist lösbar mit dem Getränkehalter 10 verbunden. Er befindet sich in der zweiten Haltestellung deckungsgleich oberhalb der Aufnahme 14.

## Patentansprüche

1. Getränkehalter, mit einer oben offenen Aufnahme zum Einstellen eines Getränkebehälters, und mit einem Haltering, der sich in einer Grundstellung an einem oberen Rand der oben offenen Aufnahme befindet, wobei der Haltering in eine erste Haltestellung bringbar ist, in der er sich seitlich oberhalb des oberen Randes der oben offenen Aufnahme befindet, **dadurch gekennzeichnet, dass** der Haltering (16) in eine zweite Haltestellung bringbar ist, in der er sich in einem Abstand oberhalb des oberen Randes der oben offenen Aufnahme (14) befindet, jedoch nicht seitlich zur oben offenen Aufnahme (14) versetzt ist.

2. Getränkehalter nach Anspruch 1, **dadurch gekennzeichnet, dass** der Getränkehalter (10) eine Schiebeführung (22) aufweist, mit der der Haltering (16) nach oben verschiebbar geführt ist.

3. Getränkehalter nach Anspruch 1, **dadurch gekennzeichnet, dass** der Getränkehalter (10) ein Schwenklager (34) für den Haltering (16) aufweist, mit dem der Haltering (16) zur Seite schwenkbar geführt ist.

4. Getränkehalter nach Anspruch 3, **dadurch gekennzeichnet, dass** das Schwenklager eine horizontale Schwenkachse (21) aufweist.

5. Getränkehalter nach Anspruch 1, **dadurch gekennzeichnet, dass** der Getränkehalter (10) eine lösbare Verbindung (40, 42) für den Haltering (16) aufweist, mit der der Haltering (16) oberhalb des oberen Randes der oben offenen Aufnahme (14) und seitlich der oben offenen Aufnahme (14) versetzt oder nicht zur oben offenen Aufnahme (14) versetzt am Getränkehalter (10) befestigbar ist.

## Claims

1. Drinks holder having a receiver open to the top for insertion of a drinks container and having a holding ring, which in a home position is located at the upper periphery of the receiver open to the top, the holding ring being arranged to be brought into a first holding position, in which it is located laterally above the upper periphery of the receiver open to the top, **characterised in that** the holding ring (16) is arranged to be brought into a second holding position, in which it is located above the upper periphery of the receiver (14) open to the top, spaced away therefrom, but not laterally offset with respect to the receiver (14) open to the top.

2. Drinks holder according to claim 1, **characterised in that** the drinks holder (10) has a slideway (22), by means of which the holding ring (16) is guided so that it can be displaced upwards.

3. Drinks holder according to claim 1, **characterised in that** the drinks holder (10) has a pivotal mounting (34) for the holding ring (16), by means of which the holding ring (16) is guided so that it can be pivoted to the side.

4. Drinks holder according to claim 3, **characterised in that** the pivotal mounting has a horizontal pivot axis (21).

5. Drinks holder according to claim 1, **characterised in that** the drinks holder (10) has a releasable connection (40, 42) for the holding ring (16), by means of which the holding ring (16) can be fastened to the drinks holder (10) above the upper periphery of the receiver (14) open to the top and laterally offset with respect to the receiver (14) open to the top or not offset with respect to the receiver (14) open to the top.

## Revendications

1. Porte-boisson comprenant un réceptacle ouvert en haut pour y placer un contenant de boisson, et une bague de retenue qui, en position de départ, se situe au niveau d'un bord supérieur du réceptacle ouvert en haut, la bague de retenue pouvant être mise dans une première position de retenue dans laquelle elle se trouve au-dessus du bord supérieur du réceptacle ouvert en haut et décalée latéralement par rapport à ce dernier, **caractérisé en ce que** la bague de retenue (16) peut être mise dans une seconde position de retenue dans laquelle elle se trouve à distance au-dessus du bord supérieur du réceptacle (14) ouvert en haut, mais n'est pas décalée latéralement par rapport au réceptacle (14) ouvert en haut.

2. Porte-boisson selon la revendication 1, **caractérisé en ce que** le porte-boisson (10) présente un guide de coulissement (22) à l'aide duquel la bague de retenue (16) est guidée de manière à pouvoir être déplacée vers le haut.

3. Porte-boisson selon la revendication 1, **caractérisé en ce que** le porte-boisson (10) présente un palier pivotant (34) pour la bague de retenue (16), qui guide la bague de retenue (16) vers le côté en la faisant pivoter.

4. Porte-boisson selon la revendication 3, **caractérisé en ce que** le palier pivotant présente un axe de pivotement horizontal (21).

5. Porte-boisson selon la revendication 1, **caractérisé en ce que** le porte-boisson (10) présente une fixation amovible (40, 42) pour la bague de retenue (16), à l'aide de laquelle la bague de retenue (16) peut être fixée au porte-boisson (10) au-dessus du bord supérieur du réceptacle (14) ouvert en haut et de façon décalée latéralement par rapport au réceptacle (14) ouvert en haut ou de façon non décalée par rapport audit réceptacle (14) ouvert en haut.
